# EUROPÄISCHE PATENTSCHRIFT

(11) **EP 1 180 487 B1**
(45) Veröffentlichungstag und Bekanntmachung des Hinweises auf die Patenterteilung: **17.03.2004**
(21) Anmeldenummer: 00117593.4
(22) Anmeldetag: 16.08.2000
(51) Int. Cl.: B65G 57/24, B65G 57/10, B65H 31/00

(54) **Vorrichtung zum orientierten Ablegen von Stapeln aus Druckerzeugnissen auf Paletten**
Device for oriented depositing of stacks of printed products on pallets
Dispositif pour déposer de façon orientée des piles de produits imprimés sur des palettes

(43) Veröffentlichungstag der Anmeldung: 20.02.2002
(73) Patentinhaber: Segbert GmbH & Co. Kommanditgesellschaft, 48683 Ahaus (DE)
(72) Erfinder: Segbert, Stephan, 48619 Heek (DE)
(74) Vertreter: Rohmann, Michael, Dr.

(56) Entgegenhaltungen:
- DE-A- 3 107 495
- US-A- 5 004 401
- US-A- 5 540 545
- US-A- 5 562 403
- US-A- 5 716 189

## Beschreibung

Die Erfindung betrifft eine Vorrichtung zum orientierten Ablegen von Stapeln aus Druckerzeugnissen auf Paletten. Druckerzeugnisse meint im Rahmen der Erfindung insbesondere Zeitschriften, Kataloge, Prospekte und dgl. Nach dem Drucken werden diese Druckerzeugnisse für die Lagerung und/oder den Transport zu ausgerichteten Stapeln zusammengefasst. Aus mehreren solcher Stapel werden in der Regel zunächst Stapelzeilen gebildet. Dabei handelt es sich um lineare Reihen der Stapel. Mehrere Stapelzeilen werden dann parallel zueinander in einer Lage angeordnet. Eine solche Lage von Stapeln wird dann normalerweise auf eine Palette abgelegt. Vorzugsweise werden mehrere Lagen übereinander auf einer Palette angeordnet.

Eine Vorrichtung der eingangs genannten Art ist aus DE 31 07 495 A1 bekannt. Zum grundsätzlichen Aufbau dieser Vorrichtung gehört ein Zuführförderer, ein Einlaufförderer und ein Formationstisch. Unter dem Formationstisch sind die Paletten angeordnet, auf denen die Ablage der Stapel erfolgen soll. Um zu erreichen, dass eine solche Vorrichtung automatisch arbeitet, ist zunächst der Einlaufförderer als Schiebeförderer aus Einlaufbahn und längs der Einlaufbahn beweglichem sowie heb- und senkbarem Einlaufschieber ausgeführt. In der Einlaufbahn ist eine Drehscheibe angeordnet. Außerdem weist der Formationstisch einen Querschieber auf, mit dem auf dem Formationstisch in einer Zeile gereihte Stapel quer zur Transportrichtung des Einlaufförderers auf einen Transportwagen abdrückbar sind. Der Transportwagen ist in einem dem Formationstisch in Förderrichtung nachgeschalteten Führungsgestell hin- und herverfahrbar und außerdem im Führungsgestell heb- und senkbar. Außerdem ist die Anordnung so getroffen, dass dem Transportwagen ein heb- und senkbarer Abstreifschieber zugeordnet ist, mit dem die in Stapelzeilen gereihten Stapel einer vor und unter dem Transportwagen angeordneten Palette übergebbar sind. Diese Vorrichtung hat sich grundsätzlich bewährt. Allerdings ist die Arbeitsgeschwindigkeit bzw. die Taktzahl der Vorrichtung verbesserungsfähig. Wenn im Übrigen nacheinander Paletten unterschiedlicher Größe beladen werden sollen und somit Lagen unterschiedlicher Größe gebildet werden sollen, sind aufwendige zusätzliche Arbeitsschritte bzw. Umrüstmaßnahmen erforderlich, die natürlich die Arbeitsgeschwindigkeit bzw. Taktzahl der Vorrichtung reduzieren.

Aus US 5 716 189 ist fernerhin eine Vorrichtung zum Palettieren von Kisten oder Paketen bekannt. Eine Palettierung von Stapeln aus Druckerzeugnissen wird nicht angesprochen. Hier ist eine Mehrzahl von Stationen, in denen Lagen der Kisten/Pakete gebildet werden können sowohl vertikal als auch horizontal benachbart angeordnet. Die Lagen werden auf einen Transportwagen überführt, welcher Transportwagen zu einer in einer Palettenbeladungsstation vorgesehenen Palette verfahren wird. Dabei befindet sich eine Überführungsplatte des Transportwagens über der Palette. Auch bei dieser Vorrichtung lässt die Arbeitsgeschwindigkeit bzw. Taktzahl zu wünschen übrig. Diese bekannte Vorrichtung hat sich nicht bewährt, wenn nacheinander Paletten unterschiedlicher Größe beladen werden sollen und somit Lagen unterschiedlicher Größe gebildet werden sollen.

Demgegenüber liegt der Erfindung das technische Problem zugrunde, eine Vorrichtung der eingangs genannten Art anzugeben, mit der nacheinander Stapel und/oder Lagen unterschiedlicher Größe ausrichtbar und ablegbar sind und/oder Paletten unterschiedlicher Größe beladen werden können und sich diese Vorrichtung nichtsdestoweniger einerseits durch eine hohe Arbeitsgeschwindigkeit und Taktzahl auszeichnet und mit der nichtsdestoweniger die Stapel aus Druckerzeugnissen funktionssicher transportiert und abgelegt werden können.

Zur Lösung dieses technischen Problems lehrt die Erfindung eine Vorrichtung zum orientierten Ablegen von Stapeln aus Druckerzeugnissen auf Paletten,
wobei zwei Zuführförderer zum Zuführen von Stapeln vorgesehen sind und wobei ein Transportwagen für die Stapel in einer Ladeposition zwischen den beiden Zuführförderern positionierbar ist,
wobei auf den Transportwagen zumindest eine Lage aus einer Mehrzahl von nebeneinander angeordneten Stapelzeilen überführbar ist,
wobei der Transportwagen ein Fördertablett aufweist, auf welchem die zumindest eine Lage ablegbar ist, und wobei zumindest zwei Zentrierelemente vorgesehen sind, die an zwei gegenüberliegenden Seiten der auf dem Fördertablett abgelegten Lage angeordnet sind und zur Zentrierung der Lage gegen die an den beiden Seiten der Lage angeordneten Stapel fahrbar sind,
wobei der Transportwagen mit der auf dem Fördertablett abgelegten Lage aus Stapelzeilen und mit den an den Stapeln anliegenden Zentrierelementen in eine Entladeposition verfahrbar ist, in welcher der Transportwagen zwischen zwei Abführförderern angeordnet ist,
und wobei die Lage von dem Transportwagen auf eine auf einem Abführförderer angeordnete Palette überführbar ist. - Die Paletten bestehen beispielsweise aus Holz oder aber auch aus Metall oder Kunststoff.

Es liegt im Rahmen der Erfindung, dass wahlweise von dem ersten oder von dem zweiten Zuführförderer Stapel auf den Transportwagen überführbar sind. Nach sehr bevorzugter Ausführungsform, der im Rahmen der Erfindung besondere Bedeutung zukommt, sind die beiden Zuführförderer zur Bildung einzelner Stapelzeilen eingerichtet und diese Stapelzeilen sind dann von dem Zuführförderer auf den Transportwagen überführbar. Vorzugsweise ist zwischen einem Zuführförderer und dem Transportwagen ein Zwischenförderer angeordnet, mit dem die Stapelzeilen von dem Zuführförderer auf den Transportwagen überführbar sind. Es liegt dabei im Rahmen der Erfindung, dass zwischen jedem Zuführförderer und dem Transportwagen ein solcher Zwischenförderer vorgesehen ist. Ein Zwischenförderer ist vorzugsweise als Zwischenförderband ausgebildet. Nach bevorzugter Ausführungsform der Erfindung arbeitet die erfindungsgemäße Vorrichtung wie folgt: Zunächst werden mit einem Zuführförderer die einzelnen Stapelzeilen gebildet und die Stapelzeilen werden nacheinander auf den Zwischenförderer überführt. Somit befindet sich schließlich eine gesamte Lage aus mehreren Stapelzeilen auf dem Zwischenförderer und vorzugsweise wird diese gesamte Lage von dem Zwischenförderer auf den Transportwagen überführt. Es liegt im Rahmen der Erfindung, dass die Stapelzeilen bzw. eine aus den Stapelzeilen gebildete Lage wahlweise von dem ersten Zuführförderer und dem zugeordneten ersten Zwischenförderer oder von dem zweiten Zuführförderer und dem daran angrenzenden zweiten Zwischenförderer auf den Transportwagen überführbar sind.

Erfindungsgemäß weist der Transportwagen ein Fördertablett auf, auf welchem Fördertablett die zumindest eine Lage ablegbar ist und es sind zumindest zwei Zentrierelemente vorgesehen, die an zwei gegenüberliegenden Seiten der auf dem Fördertablett abgelegten Lage angeordnet sind und zur Zentrierung der Lage bzw. zur Zentrierung der Stapel dieser Lage gegen die an den beiden Seiten der Lage angeordneten Stapel fahrbar sind. Die Zentrierelemente dienen also der Zentrierung bzw. der Positionierung der Stapel einer Lage. Mit Hilfe dieser Zentrierelemente ist es möglich, die Ausdehnung der Lage exakt auf die Größe einer verwendeten Palette einzustellen. Es liegt im Rahmen der Erfindung, dass bei der Einwirkung der Zentrierelemente Stapel der Lage in eine korrekte bzw. in eine gewünschte Position verschoben werden. Nach sehr bevorzugter Ausführungsform der Erfindung sind vier Zentrierelemente an den vier Seiten der auf dem Fördertablett abgelegten Lage vorgesehen und sind diese vier Zentrierelemente zur Zentrierung der Lage bzw. zur Zentrierung der Stapel dieser Lage gegen die an den vier Seiten der Lage angeordneten Stapel fahrbar. Eine solche Lage aus Stapeln hat in der Draufsicht in der Regel eine rechteckige Form. Es liegt somit im Rahmen der Erfindung, dass vier Zentrierelemente den vier Seiten eines solchen Rechteckes zugeordnet sind und gegen die Stapel fahrbar sind, die an den entsprechenden vier Seiten der Lage angeordnet sind. Mit vier Zentrierelementen ist eine besonders effektive Ausrichtung, Positionierung und Zentrierung einer Lage bzw. der Stapel dieser Lage möglich und ist somit eine optimale Anpassung der Ausdehnung der Lage an die Palette möglich, auf der diese Lage anschließend abgelegt werden soll. Nach sehr bevorzugter Ausführungsform der Erfindung sind die Zentrierelemente als vertikal ausgerichtetete Zentrierplatten ausgebildet. Die Fläche der Zentrierplatten ist somit zweckmäßigerweise senkrecht zu der Oberfläche des Fördertabletts angeordnet. Vorzugsweise ist an jedes Zentrierelement, bevorzugt an jede Zentrierplatte, zumindest ein hydropneumatischer Zylinder angeschlossen, mit welchem das Zentrierelement vor- und zurückbewegbar ist. - Es liegt im Rahmen der Erfindung, dass die Zentrierung einer auf dem Fördertablett angeordneten Lage bzw. die Betätigung der Zentrierelemente in der Ladeposition des Transportwagens erfolgt. Es liegt aber auch im Rahmen der Erfindung, dass die Zentrierung der Lage bzw. die Betätigung der Zentrierelemente während des Verfahrens des Transportwagens aus der Ladeposition in die Entladeposition erfolgen kann.

Der Transportwagen ist nach bevorzugter Ausführungsform der Erfindung auf Schienen aus der Ladeposition in die Entladeposition verfahrbar. Der Transportwagen wird dabei mit dem Fördertablett und mit der auf dem Fördertablett abgelegten und vorzugsweise bereits zentrierten Lage in die Entladeposition bewegt.

Es liegt im Rahmen der Erfindung, dass eine Lage von dem Transportwagen in der Entladeposition wahlweise auf eine Palette auf dem ersten Abführförderer oder auf eine Palette auf dem zweiten Abführförderer überführbar ist. Dabei können die Paletten auf dem ersten und zweiten Abführförderer eine unterschiedliche Größe aufweisen und somit zweckmäßigerweise auch für unterschiedlich große Lagen vorgesehen sein. - Nach sehr bevorzugter Ausführungsform, der im Rahmen der Erfindung besondere Bedeutung zukommt, ist eine Lage mit Hilfe des Fördertabletts auf eine auf einem Abführförderer angeordnete Palette überführbar und ist das Fördertablett dazu über den Abführförderer verfahrbar und anschließend wieder zurück zum Transportwagen verfahrbar. Nach dieser bevorzugten Ausführungsform wird also das Fördertablett mitsamt der abzulegenden Lage zu dem Abführförderer bzw. zu der auf dem Abführförderer angeordneten Palette bewegt. Es liegt dabei im Rahmen der Erfindung, dass die Bewegung des Fördertabletts senkrecht zur Fahrtrichtung des Transportwagens erfolgt. Das Fördertablett weist vorzugsweise zumindest ein Förderband auf, auf dessen Oberfläche sich die abzulegende Lage befindet. Sehr bevorzugt besteht das Fördertablett aus mehreren zueinander parallelen Förderbändern, auf deren Oberfläche die abzulegende Lage aufgenommen wird. Wie oben bereits ausgeführt, fährt das Fördertablett zum Ablegen einer Lage vorzugsweise über einen Abführförderer. Beim anschließenden Zurückfahren des Fördertabletts in die Entladeposition des Transportwagens wird zweckmäßigerweise das zumindest eine Förderband, bevorzugt die mehreren zueinander parallelen Förderbänder, gegenläufig zur Bewegung des Fördertabletts bewegt. Auf diese Weise werden die Stapel der abzulegenden Lagen zeilenweise sehr funktionssicher auf die auf dem Abführförderer angeordnete Palette überführt. Nach sehr bevorzugter Ausführungsform der Erfindung fährt das Fördertablett mitsamt den in ihrer Zentrierposition befindlichen Zentrierelementen über einen Abführförderer. Anschließend fährt dann vorzugsweise zuerst nur das Fördertablett zum Transportwagen zurück, wobei die Zentrierelemente zunächst noch über dem Abführförderer verbleiben. Die Zentrierelemente sorgen dabei beim Zurückfahren des Fördertabletts für ein zentriertes bzw. positioniertes Ablegen der Lage auf der Palette. Dabei kann ein transportwagenseitig angeordnetes Zentrierelement gleichsam als Widerlager für die abzulegenden Stapel bzw. Zeilen wirken. Nachdem das Fördertablett zum Transportwagen zurückgefahren wurde, werden dann auch die Zentrierelemente zum Transportwagen zurückgefahren. Mit Hilfe der Zentrierelemente ist somit ein sehr funktionssicheres positioniertes Ablegen einer Lage auf einer Palette möglich. - Anschließend wird der Transportwagen mitsamt Fördertablett wieder in die Ladeposition verfahren, um hier eine weitere Lage aus Stapeln aufzunehmen.

Es liegt im Rahmen der Erfindung, dass mit dem ersten Zuführförderer Stapel einer ersten Größe und/oder Form zugeführt werden, und dass mit dem zweiten Zuführförderer Stapel einer zweiten Größe und/oder Form zugeführt werden, die verschieden von der ersten Größe und/oder Form ist. Aus diesen beiden unterschiedlichen Arten von Stapeln werden jeweils auch verschiedene Lagen auf dem Transportwagen bzw. auf dem Fördertablett gebildet und einer entsprechenden Palette auf einem Abführförderer zugeführt. Es liegt dabei im Rahmen der Erfindung, dass zunächst eine Lage aus den mit dem ersten Zuführförderer zugeführten Stapeln auf dem Transportwagen gebildet und auf einer Palette abgelegt wird, und dass im Anschluss daran eine Lage aus den mit dem zweiten Zuführförderer zugeführten Stapeln auf dem Transportwagen gebildet und auf einer Palette abgelegt wird. Insoweit können abwechselnd Lagen mit jeweils unterschiedlichen Stapeln bzw. Lagen unterschiedlicher Größe gebildet und abgelegt werden. Es liegt weiterhin im Rahmen der Erfindung, dass nacheinander auf dem Transportwagen bzw. auf dem Fördertablett mit Hilfe der Zentrierelemente unterschiedlich große Lagen ausgerichtet werden, die dann jeweils auf einer entsprechend großen Palette abgelegt werden können. Es liegt außerdem im Rahmen der Erfindung, dass auf dem ersten Abführförderer eine Palette einer ersten Größe angeordnet werden kann, und dass auf dem zweiten Abführförderer eine Palette einer zweiten Größe angeordnet werden kann. Erfindungsgemäß kann das Fördertablett wahlweise über den ersten Abführförderer oder über den zweiten Abführförderer verfahren werden. Im Rahmen der Erfindung liegt es somit fernerhin, dass abwechselnd Lagen auf einer Palette auf dem ersten Abführförderer und auf einer Palette auf dem zweiten Abführförderer abgelegt werden können.

Die vorstehenden Ausführungen zeigen, dass sich die erfindungsgemäße Vorrichtung durch eine besondere Flexibilität und Variabilität auszeichnet. Es können zügig nacheinander unterschiedliche Lagen gebildet werden und auf unterschiedlich großen Paletten abgelegt werden. Dabei zeichnet sich die erfindungsgemäße Vorrichtung durch eine überraschend hohe Arbeitsgeschwindigkeit bzw. Taktzeit aus.

Nichtsdestoweniger ist die Vorrichtung verhältnismäßig einfach und wenig aufwendig aufgebaut.

Nachfolgend wird die Erfindung anhand einer lediglich ein Ausführungsbeispiel darstellenden Zeichnung näher erläutert. Es zeigen in schematischer Darstellung:
- Fig. 1: eine Draufsicht auf eine erfindungsgemäße Vorrichtung in einen ersten Arbeitszustand,
- Fig. 2: einen vergrößerten Ausschnitt A aus Fig. 1,
- Fig. 3: den Gegenstand nach Fig. 1 in einem zweiten Arbeitszustand und
- Fig. 4: den Gegenstand nach Fig. 1 in einem dritten Arbeitszustand.

Die Figuren zeigen eine Vorrichtung zum orientierten Ablegen von Stapeln 1 aus Druckerzeugnissen auf Paletten 2. Die Vorrichtung weist einen ersten Zuführförderer 3 zum Zuführen von Stapeln 1 auf. Die Vorrichtung weist weiterhin einen zweiten Zuführförderer 4 auf, mit dem vorzugsweise und im Ausführungsbeispiel Stapel 1 zugeführt werden, die gegenüber den Stapeln 1, die mit dem ersten Zuführförderer 3 zugeführt werden, eine unterschiedliche Größe bzw. horizontale Ausdehnung aufweisen. Die mit dem zweiten Zuführförderer 4 zugeführten Stapel 1 sind in den Figuren gestrichelt dargestellt worden. Die Zuführrichtungen des ersten Zuführförderers 3 und des zweiten Zuführförderers 4 sind im Ausführungsbeispiel parallel zueinander.

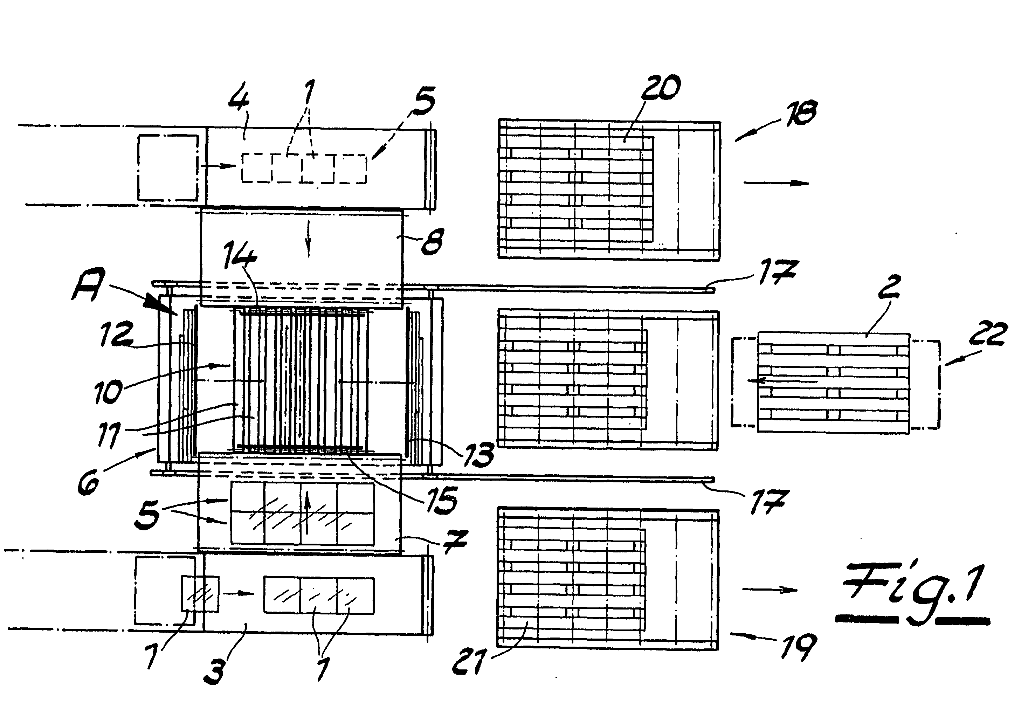

In Fig. 1 ist ein Transportwagen 6 erkennbar, der im Arbeitszustand nach Fig. 1 in einer Ladeposition zwischen den beiden Zuführförderern 3, 4 positioniert ist. Zwischen dem ersten Zuführförderer 3 und dem Transportwagen 6 ist ein erster Zwischenförderer 7 angeordnet. Zwischen dem zweiten Zuführförderer 4 und dem Transportwagen 6 ist ein zweiter Zwischenförderer 8 vorgesehen. Beide Zwischenförderer 7, 8 sind vorzugsweise und im Ausführungsbeispiel als Zwischenförderbänder ausgebildet. Die Transportrichtung der Zwischenförderbänder wurde in den Figuren mit Hilfe eines Pfeils angedeutet.

Die beiden Zuführförderer 3, 4 sind jeweils zur Bildung einzelner Stapelzeilen 5 eingerichtet. Zweckmäßigerweise wird eine Stapelzeile 5, die beispielsweise auf dem ersten Zuführförderer 3 fertiggestellt wurde, anschließend auf den ersten Zwischenförderer 7 überführt. In dem Arbeitszustand nach Fig. 1 sind bereits zwei fertige Stapelzeilen 5 auf dem ersten Zwischenförderer 7 positioniert worden und eine dritte Stapelzeile 5 wird gerade aus Stapeln 1 auf dem ersten Zuführförderer 3 fertiggestellt. Vorzugsweise und im Ausführungsbeispiel wird auf einen Zwischenförderer 7, 8 zunächst eine Lage 9 aus einer Mehrzahl von Stapelzeilen 5 fertiggestellt und wird dann die fertige Lage 9 mit dem Zwischenförderer 7, 8 bzw. durch eine Bewegung des Zwischenförderbandes auf den Transportwagen 6 überführt. Erfindungsgemäß weist der Transportwagen 6 ein Fördertablett 10 auf, auf dem die fertige Lage 9 aus mehreren Stapelzeilen 5 aufgenommen wird. Das Fördertablett 10 ist zweckmäßigerweise und im Ausführungsbeispiel mit einer Mehrzahl von zueinander parallelen Tablettförderbändern 11 ausgerüstet.

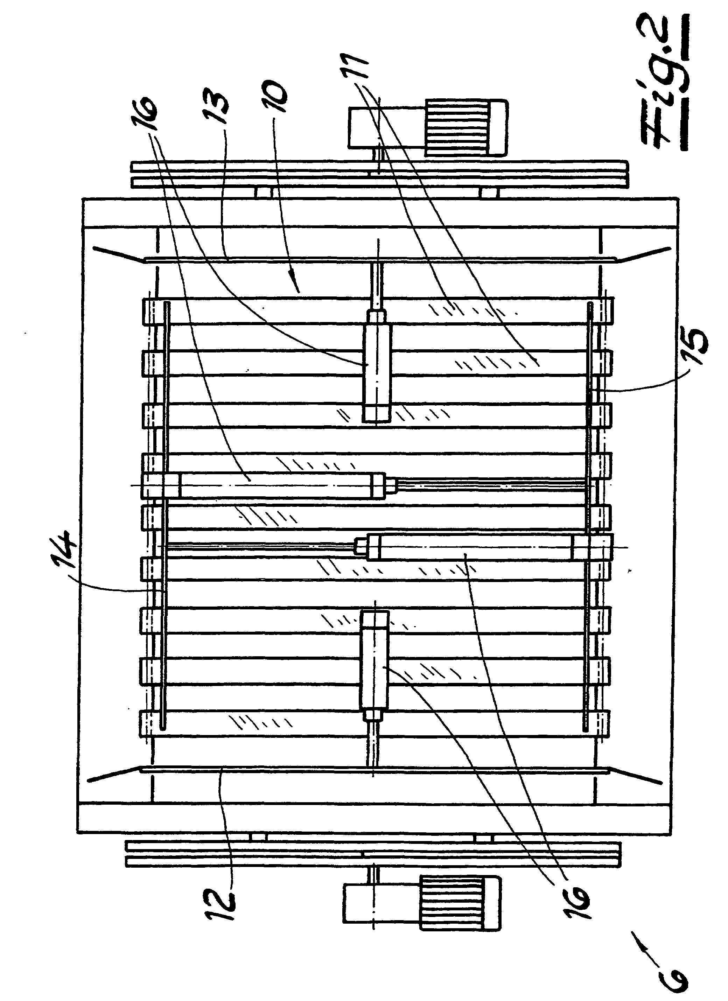

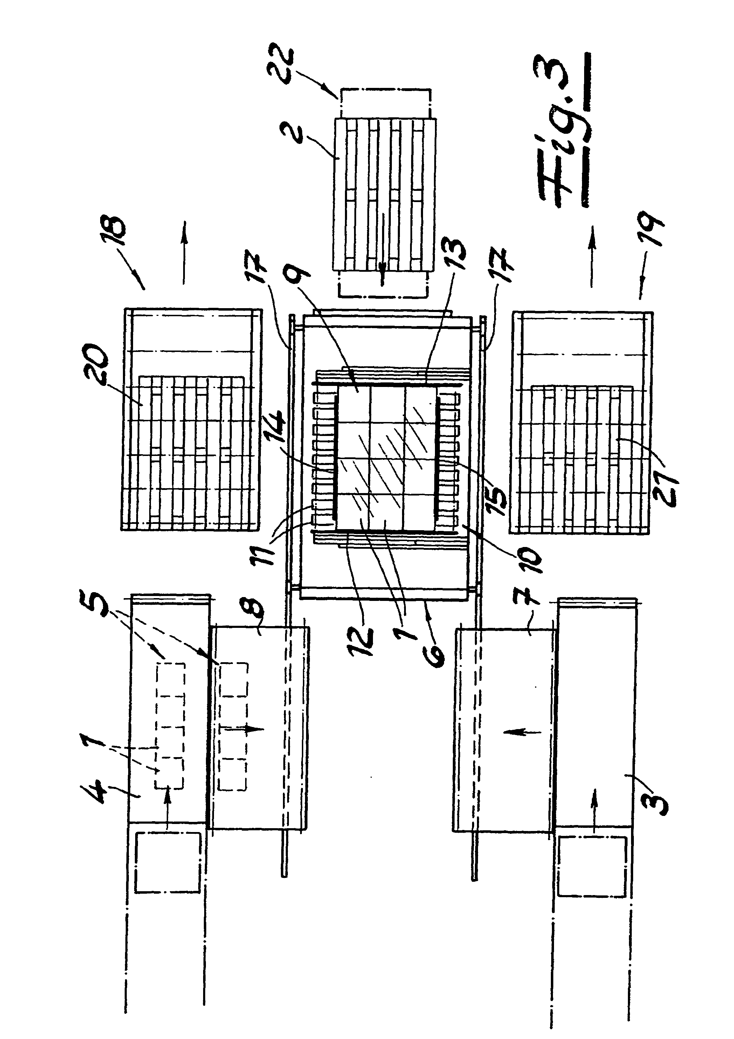

Insbesondere in der Figur 2 ist erkennbar, dass die Vorrichtung vier als Zentrierplatten 12, 13, 14, 15 ausgebildete Zentrierelemente aufweist, die in dem Arbeitszustand nach Fig. 2 über dem Fördertablett 10 angeordnet sind. Die Zentrierplatten 12, 13, 14, 15 sind vorzugsweise und im Ausführungsbeispiel vertikal bzw. senkrecht zur Oberfläche des Fördertabletts 10 ausgerichtet. Die Zentrierplatten 12, 13, 14, 15 sind gegen die vier Seiten einer in der Draufsicht rechteckigen Lage 9 verfahrbar, wodurch diese Lage 9 bzw. die Stapel 1 dieser Lage 9 positioniert bzw. zentriert werden. Die Zentrierelemente bzw. Zentrierplatten 12, 13, 14, 15 verfahren dabei in ihre in Fig. 3 dargestellte Zentrierposition. Auf diese Weise können die Stapel 1 einer Lage 9 optimal ausgerichtet und an die Größe und/oder Form einer Palette 2, auf der die Lage 9 abgelegt werden soll, angepasst werden. Vorzugsweise und im Ausführungsbeispiel nach Fig. 2 sind zwei äußere gegenüberliegende Zentrierplatten 12, 13 vorgesehen sowie gegenüberliegende innere Zentrierplatten 14, 15, die zwischen die äußeren Zentrierplatten 12, 13 verfahrbar sind. Zweckmäßigerweise und im Ausführungsbeispiel werden die Zentrierplatten 12, 13, 14, 15 von jeweils einem hydropneumatischen Zylinder 16 betätigt.

Nach dem Aufnehmen einer Lage 9 und vorzugsweise nach dem Ausrichten und/oder Zentrieren der Lage 9 mit Hilfe der Zentrierelemente wird der Transportwagen 6 mit dem Fördertablett 10 und der auf dem Fördertablett 10 aufgenommenen Lage 9 in die Entladeposition verfahren, wobei die Zentrierelemente zweckmäßigerweise in ihrer Zentrierposition verbleiben. Diesen Arbeitszustand zeigt Fig. 3. Der Transportwagen wird dabei vorzugsweise und im Ausführungsbeispiel über Schienen 17 verfahren.

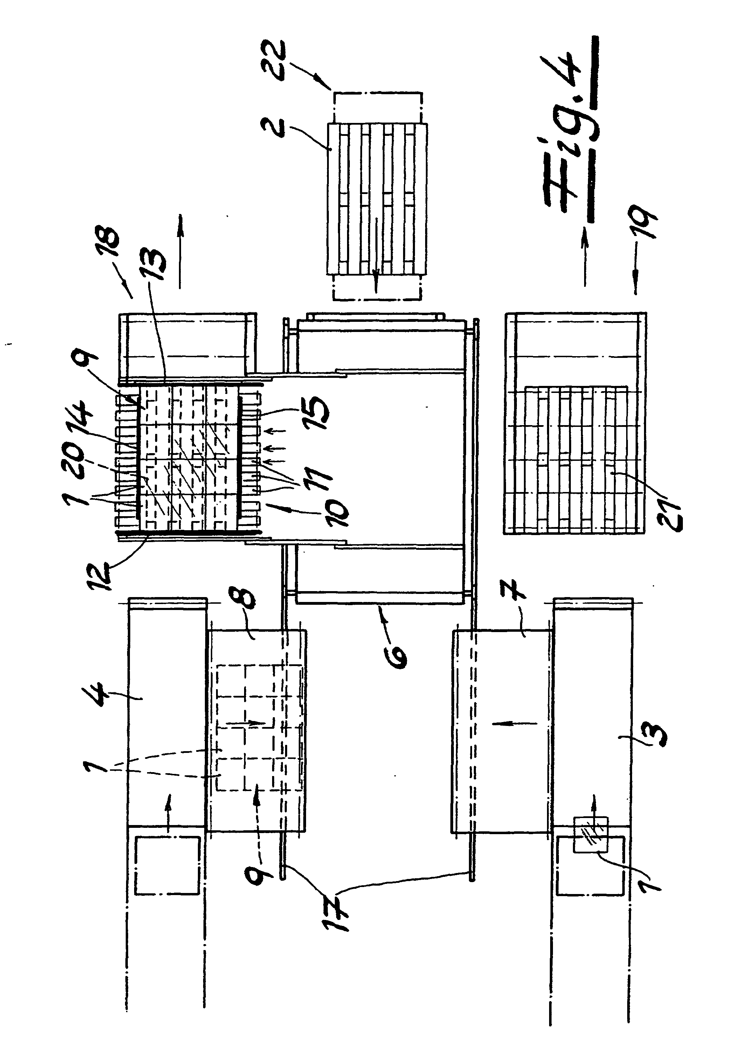

In der Entladeposition ist der Transportwagen 6 zwischen zwei Abführförderern 18, 19 angeordnet. Die Abführrichtungen der beiden Abführförderer 18, 19 sind dabei zweckmäßigerweise parallel zueinander ausgerichtet. Im Ausführungsbeispiel ist auf jedem der beiden Abführförderer 18, 19 eine Palette 20, 21 vorgesehen. Die erste Palette 20 weist dabei eine von der zweiten Palette 21 unterschiedliche Größe bzw. horizontale Ausdehnung auf. Zweckmäßigerweise und im Ausführungsbeispiel kann das Fördertablett 10 mit der aufgenommenen Lage 9 wahlweise über den ersten Abführförderer 18 oder über den zweiten Abführförderer 19 fahren, je nachdem, welche Palette 20, 21 mit der Lage 9 beladen werden soll. Im Ausführungsbeispiel nach Fig. 4 ist das Fördertablett 10 gerade über den ersten Abführförderer 18 gefahren worden. Dabei wurden vorzugsweise und im Ausführungsbeispiel die zweckmäßigerweise in ihrer Zentrierposition befindlichen Zentrierelemente bzw. Zentrierplatten 12, 13, 14, 15 mit dem Fördertablett 10 über den Abführförderer 18 gefahren. Im Anschluss an diesen Zustand wird das Fördertablett 10 wieder zurück zu dem Transportwagen 6 in der Entladeposition gefahren, wobei zweckmäßigerweise die Tablettförderbänder 11 in die zu dieser Fahrtrichtung entgegengesetzte Richtung bewegt werden. Das wurde in Fig. 4 durch Pfeile veranschaulicht. Vorzugsweise fährt zunächst nur das Fördertablett 10 von dem Abführförderer 18 zum Transportwagen 6 zurück, während die Zentrierelemente bzw. Zentrierplatten 12, 13, 14, 15 noch über dem Abführförderer 18 verbleiben. Nachdem das Fördertablett 10 zum Abführförderer 18 zurückgefahren wurde und die Lage 9 auf der Palette 20 abgelegt wurde, fahren dann auch die Zentrierelemente bzw. Zentrierplatten 12, 13, 14, 15 zurück zum Transportwagen 6. Auf die beschriebene Weise kann die Lage 9 bzw. können die einzelnen Stapelzeilen 5 auf sehr funktionssichere Weise auf der ersten Palette 20 abgelegt werden. Es liegt im Rahmen der Erfindung, dass auf eine Palette 20, 21 nacheinander mehrere Lagen 9 aufgebracht werden.

In den Figuren ist im Übrigen ein Palettenmagazin 22 erkennbar, in welchem stets eine Mehrzahl von Paletten 2 bevorratet wird. Die Paletten 2 werden vorzugsweise mit einer geeigneten, nicht näher dargestellten Einrichtung zunächst in die Entladeposition des Transportwagens 6 befördert und von dort aus auf den entsprechenden Abführförderer 18, 19.

Nachdem, wie oben beschrieben, die Lage 9 auf die erste Palette 20 des ersten Abführförderers 18 überführt wurde, kann nunmehr eine weitere Lage 9 aus Stapeln 1, die von dem zweiten Zuführförderer 4 zugeführt wurden, mit dem Transportwagen 6 in die Entladeposition transportiert werden. Vorzugsweise und im Ausführungsbeispiel wurde eine solche weitere Lage 9 bereits auf dem zweiten Zwischenförderer 8 fertiggestellt, wie es in Fig. 4 gestrichelt angedeutet wurde. Diese Lage 9 wird dann mittels des zweiten Zwischenförderers 8 auf das Fördertablett 10 des in der Ladeposition positionierten Transportwagens 6 überführt. Anschließend wird der Transportwagen 6 mit dieser Lage 9 in die Entladeposition verfahren und in der Entladeposition wird das Fördertablett 10 dann über den zweiten Abführförderer 19 bewegt, auf dem die zweite Palette 21 angeordnet ist. Daraufhin wird in der bereits beschriebenen Art und Weise die Lage 9 auf der zweiten Palette 21 abgelegt. Im Anschluss daran kann dann wieder eine Lage 9 transportiert werden, die aus Stapeln 1 gebildet wird, die mit dem ersten Zuführförderer 3 zugeführt wurden.

## Patentansprüche

1. Vorrichtung zum orientierten Ablegen von Stapeln (1) aus Druckerzeugnissen auf Paletten (2),
wobei zwei Zuführförderer (3, 4) zum Zuführen von Stapeln (1) vorgesehen sind und wobei ein Transportwagen (6) für die Stapel (1) in einer Ladeposition zwischen den beiden Zuführförderern (3, 4) positionierbar ist,
wobei auf den Transportwagen (6) zumindest eine Lage aus einer Mehrzahl von nebeneinander angeordneten Stapelzeilen (5) überführbar ist,
wobei der Transportwagen (6) ein Fördertablett (10) aufweist, auf welchem die zumindest eine Lage (9) ablegbar ist, und wobei zumindest zwei Zentrierelemente vorgesehen sind, die an zwei gegenüberliegenden Seiten der auf dem Fördertablett (10) abgelegten Lage (9) angeordnet sind und zur Zentrierung der Lage (9) gegen die an den beiden Seiten der Lagen (9) angeordneten Stapel (1) fahrbar sind,
wobei der Transportwagen (6) mit der auf dem Fördertablett (10) abgelegten Lage (9) aus Stapelzeilen (5) und mit den an den Stapeln (1) anliegenden Zentrierelementen in eine Entladeposition verfahrbar ist, in welcher der Transportwagen (6) zwischen zwei Abführförderern (18, 19) angeordnet ist,
und wobei die Lage (9) von dem Transportwagen (6) auf eine auf einem Abführförderer (18, 19) angeordnete Palette (2) überführbar ist.

2. Vorrichtung nach Anspruch 1, wobei ein Zuführförderer (3, 4) zur Bildung einzelner Stapelzeilen (5) eingerichtet ist und diese Stapelzeilen (5) von dem Zuführförderer (3, 4) auf den Transportwagen (6) überführbar sind.

3. Vorrichtung nach einem der Ansprüche 1 oder 2, wobei zwischen einem Zuführförderer (3, 4) und dem Transportwagen (6) ein Zwischenförderer (7, 8) angeordnet ist, mit dem die Stapelzeilen (5) von dem Zuführförderer (3, 4) auf den Transportwagen (6) überführbar sind.

4. Vorrichtung nach einem der Ansprüche 1 bis 3, wobei vier Zentrierelemente an den vier Seiten der auf dem Fördertablett (10) abgelegten Lage (9) vorgesehen sind und zur Zentrierung der Lage (9) gegen die an den vier Seiten der Lage 9 angeordneten Stapel (1) fahrbar sind.

5. Vorrichtung nach einem der Ansprüche 1 bis 4, wobei die Zentrierelemente als vertikal ausgerichtete Zentrierplatten (12, 13, 14, 15) ausgebildet sind.

6. Vorrichtung nach einem der Ansprüche 1 bis 5, wobei eine Lage (9) von dem Transportwagen (6) in der Entladeposition wahlweise auf eine Palette (2) auf dem ersten Abführförderer (18) oder auf eine Palette (2) auf dem zweiten Abführförderer (19) überführbar ist.

7. Vorrichtung nach einem der Ansprüche 1 bis 6, wobei die Lage (9) mit Hilfe des Fördertabletts (10) auf eine auf einem Abführförderer (18, 19) angeordnete Palette (2) überführbar ist und das Fördertablett (10) dazu über den Abführförderer (18, 19) und anschließend wieder zurück zum Transportwagen (6) verfahrbar ist.

## Claims

1. A device for depositing stacks (1) of printed matter on pallets (2) in an oriented fashion,
wherein two feed conveyors (3, 4) are provided in order to supply the stacks (1), and wherein a transfer car (6) for the stacks (1) can be positioned in a loading position between the two feed conveyors (3, 4),
wherein at least one layer consisting of a series of adjacently arranged stack rows (5) can be transferred to the transfer car (6),
wherein the transfer car (6) contains a conveyor tray (10), on which the at least one layer (9) can be deposited, wherein at least two centering elements are arranged on two opposite sides of the layer (9) deposited on the conveyor tray (10), and wherein said centering elements can be moved against the stacks (1) arranged on the two sides of the layer (9) in order to center the layer (9),
wherein the transfer car (6) can be displaced into an unloading position, in which the transfer car (6) is positioned between two delivery conveyors (18, 19), together with the layer (9) of stack rows (5) deposited on its conveyor tray (10) and the centering elements adjoining the stacks (1),
and wherein the layer (9) can be transferred from the transfer car (6) to a palette (2) arranged on a delivery conveyor (18, 19).

2. The device according to Claim 1, wherein one feed conveyor (3, 4) is designed for creating individual stack rows (5) and the stack rows (5) can be transferred from the feed conveyor (3, 4) to the transfer car (6).

3. The device according to Claim 1 or 2, wherein an intermediate conveyor (7, 8) is arranged between a feed conveyor (3, 4) and the transfer car (6), and wherein said intermediate conveyor serves for transferring the stack rows (5) from the feed conveyor (3, 4) to the transfer car (6).

4. The device according to one of Claims 1-3, wherein four centering elements are provided on the four sides of the layer (9) deposited on the conveyor tray (10), and wherein said centering element can be moved against the stacks (1) arranged on the four sides of the layer (9) in order to center the layer (9).

5. The device according to one of Claims 1-4, wherein the centering elements are realized in the form of vertically aligned centering plates (12, 13, 14, 15).

6. The device according to one of Claims 1-5, wherein a layer (9) can be selectively transferred from the transfer car (6) to a palette (2) arranged on the first delivery conveyor (18) or to a palette (2) arranged on the second delivery conveyor (19) in the unloading position.

7. The device according to one of Claims 1-6, wherein the layer (9) can be transferred to a palette (2) arranged on a delivery conveyor (18, 19) with the aid of the conveyor tray (10), and wherein the conveyor tray (10) can be displaced above the delivery conveyor (18, 19) and subsequently back to the transfer car (6) for this purpose.

## Revendications

1. Dispositif de dépôt orienté de piles (1) de produits d'impression sur des palettes (2),
deux convoyeurs d'acheminement (3, 4) étant prévus pour l'acheminement de piles (1) et un chariot de transport (6) pour les piles (1) étant positionnable dans une position de chargement entre les deux convoyeurs d'acheminement (3, 4),
au moins une couche d'une pluralité de lignes de piles (5) disposées les unes près des autres étant transférable sur le chariot de transport (6),
le chariot de transport (6) présentant une tablette de transport (10) sur laquelle l'au moins une couche (9) peut être déposée et étant prévus au moins deux éléments de centrage qui sont disposés sur deux faces opposées de la couche (9) déposée sur la tablette de transport (10) et les piles pouvant être conduites pour le centrage de la couche (9) contre les piles (1) disposées des deux côtés des couches (9),
le chariot de transport (6) étant déplaçable avec la couche (9) de lignes de piles (5) déposée sur la tablette de transport (10) et avec les éléments de centrage reposant sur les piles (1) vers une position de déchargement dans laquelle le chariot de transport (6) est disposé entre deux convoyeurs d'évacuation (18, 19),
et la couche (9) étant transférable du chariot de transport (6) sur une palette (2) disposée sur un convoyeur d'évacuation (18, 19).

2. Dispositif selon la revendication 1, un convoyeur d'évacuation (3, 4) étant équipé pour former différentes lignes de piles (5) et ces lignes de piles (5) étant transférables du convoyeur d'acheminement (3, 4) sur le chariot de transport (6).

3. Dispositif selon l'une quelconque des revendications 1 ou 2, dans lequel est disposé, entre un convoyeur d'acheminement (3, 4) et le chariot de transport (6), un convoyeur intermédiaire (7, 8) qui permet de transférer les lignes de piles (5) du convoyeur d'acheminement (3, 4) sur le chariot de transport (6).

4. Dispositif selon l'une quelconque des revendications 1 à 3, dans lequel quatre éléments de centrage sont prévus sur les quatre côtés de la couche (9) déposée sur la tablette de transport (10) et déplaçables pour le centrage de la couche (9) contre les piles (1) disposées sur les quatre côtés de la couche (9).

5. Dispositif selon l'une quelconque des revendications 1 à 4, dans lequel les éléments de centrage sont conformés comme des plaques de centrage orientées verticalement (12, 13, 14, 15).

6. Dispositif selon l'une quelconque des revendications 1 à 5, dans lequel une couche (9) est transférable du chariot de transport (6) dans la position de déchargement au choix sur une palette (2) sur le premier convoyeur d'évacuation (18) ou sur une palette (2) sur le deuxième convoyeur d'évacuation (19).

7. Dispositif selon l'une quelconque des revendications 1 à 6, dans lequel une couche (9) est transférable à l'aide de la tablette de transport (10) sur une palette (2) disposée sur un convoyeur d'évacuation (18, 19) et la tablette de transport (10) est pour cela déplaçable à l'aide du convoyeur d'évacuation (18, 19) et ensuite de nouveau ramenée vers le chariot de transport (6).
